# EUROPEAN PATENT APPLICATION

(11) **EP 4 686 083 A1**
(43) Date of publication of application: **28.01.2026**
(21) Application number: 25191376.0
(22) Date of filing: 23.07.2025
(51) Int. Cl.: H02P 25/18, B60L 15/20

(54) **SYSTEM AND METHOD OF CONTROL OF AN AXIAL FLUX ELECTRIC MOTOR FOR AN AUTOMOTIVE VEHICLE**

(30) Priority: 25.07.2024 IT 202400017371
(71) Applicant: Texa S.p.A., 31050 Monastier di Treviso (TV) (IT)
(72) Inventor: VIANELLO, Bruno, 31050 Monastier di Treviso (TV) (IT)
(74) Representative: Studio Torta S.p.A.

(57) **Abstract**

An electronic control system (3) comprising an electric battery pack (9) to provide a direct electric voltage (V1), an inverter (10)that receives the direct voltage (V1), and is configured to provide a first three-phase alternating electric voltage (V2), a commutator device (12) that receives the first three-phase alternating electric voltage (V2) and is configured to switch, in response to a control signal (SC), between a first switching state, in which it connects the three stator windings (7) according to a star-shaped electrical configuration, and a second switching state, in which it electrically connects the three stator windings (7) according to a delta electrical configuration, and an electronic control unit (13) that switches the commutator device (12) between the first and the second switching state based on one or more first parameters of the automotive vehicle (1) and/or one or more second parameters of the electric motor (2).

## Description

### CROSS-REFERENCE TO RELATED APPLICATIONS

This patent application claims priority from Italian patent application no. 102024000017371 filed on 25 July 2024, the entire disclosure of which is incorporated herein by reference.

### TECHNICAL FIELD

This invention relates to a system and method of control of an axial flux electric motor for an automotive vehicle.

In particular, this invention relates to an electric control system of an automotive axial flux permanent magnet electric motor for electric cars or sports cars, preferably belonging to the supercar or super-sport category; to which the following discussion will make explicit reference without any loss of generality thereby.

### PRIOR ART

As is well known, electric automobiles comprise an electric power supply unit generally consisting of an electric battery pack that provides a direct voltage output, an inverter unit that receives the direct voltage input and provides an alternating voltage output, and an electric powertrain unit in turn equipped with an axial flux electric motor that is electrically connected to the inverter unit to receive the alternating voltage and is equipped with a drive shaft to rotate the wheels of the automobile.

The application of the above-mentioned architecture in very high-performance road cars, that is, those belonging to the supercar or super-sport category, has so far proved particularly critical to implement, especially when the speed of the car reaches high values, for example above 250 km/h, and the electric motor 2 exceeds 6500 rpm.

Experimental tests carried out by the Applicant have shown that the axial flux electric motor, when operating in the above-mentioned condition, is subjected to particularly high thermal stresses that can cause critical issues if the motor is not adequately cooled, and negatively impact the motor's performance, in particular its continuous power output.

To overcome these critical issues, several solutions have been proposed, but to date they have not been satisfactory.

### DESCRIPTION OF THE INVENTION

The aim of this invention is therefore to provide an electronic control system of an axial flux electric motor for an automotive vehicle, preferably a high-performance one, which overcomes the critical issues described above.

In accordance with this purpose, according to this invention, an electronic control system of an axial flux electric motor for an automotive vehicle is provided, as defined in the related independent claim and preferably, but not necessarily, in any of the dependent claims.

According to this invention, a control method of an axial flux electric motor for an automotive vehicle is also provided, as defined in the related independent claim and preferably, but not necessarily, in any of the dependent claims.

The claims describe preferred embodiments of the present invention and form an integral part of the present specification.

### BRIEF DESCRIPTION OF THE DRAWINGS

This invention will now be described with reference to the accompanying drawings, which illustrate a non-limiting embodiment thereof, wherein:
Figure 1 is a schematic side elevation view of an electric automobile equipped with an electronic control system of an axial flux electric motor for an automotive vehicle, produced according to the precepts of this invention,
Figure 2 is a block diagram of the electronic control system of an axial flux electric motor for an automotive vehicle, produced according to the precepts of this invention,
Figure 3 is a circuit diagram of the electronic control system of an axial flux electric motor for an automotive vehicle produced according to the precepts of this invention.

### PREFERRED EMBODIMENTS OF THE INVENTION

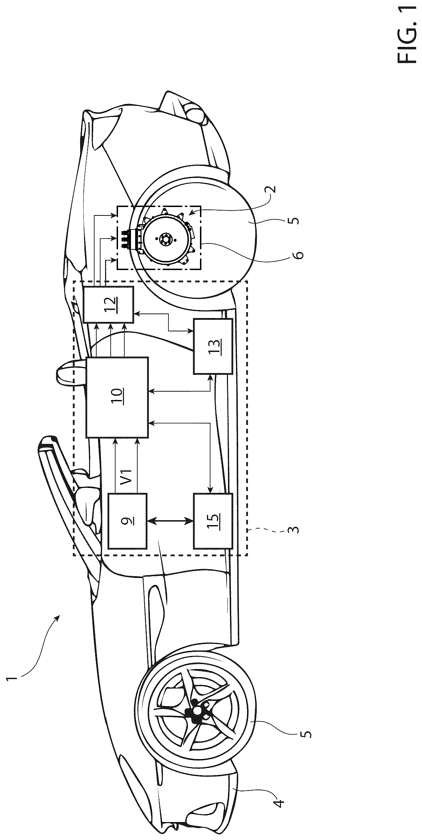

With reference to Figure 1, the reference number 1 denotes as a whole an electric automotive vehicle comprising an automotive electric motor with axial flux permanent magnets (AFPM), hereinafter referred to as an axial flux electric motor 2, and an electronic control system 3 that is mounted on board the automotive vehicle 1 and is configured to drive and/or control the axial flux electric motor 2 of the automotive vehicle 1 in the manner described in detail below.

With reference to Figure 1, the electric motor 2 is mounted on the automotive vehicle 1.

The automotive vehicle 1 is conveniently configured to transport people and preferably belongs to the category of very high-performance road vehicles (high power, high torque and high speed). In particular, the automotive vehicle 1 is an electric automobile belonging to the category of so-called "supercar" or "super sport" electrically driven vehicles capable of reaching speeds in the range of 300 km/h to 430 km/h.

As schematically shown in Figure 1, the automotive vehicle 1 comprises a load-bearing chassis 4 (body), ground-resting wheels 5, and a powertrain 6 that is mounted on the automotive vehicle and is preferably supported by the load-bearing chassis 4. The powertrain 6 is exclusively electric, that is, it does not include an internal combustion engine and includes at least one axial flux electric motor 2. The powertrain 6 is configured in such a way that it drives one or more wheels 5 of the automotive vehicle 1 into rotation by means of at least one drive shaft of the axial flux electric motor 2,

According to a preferred embodiment, an axial flux electric motor 2 of the powertrain 6 preferably comprises two disc rotors (not illustrated) and a central stator (not illustrated), which is arranged between the two side disc rotors. The two disc rotors are designed to rotate with respect to the central stator (which remains stationary). Conveniently, the two disc rotors are equipped with permanent magnets.

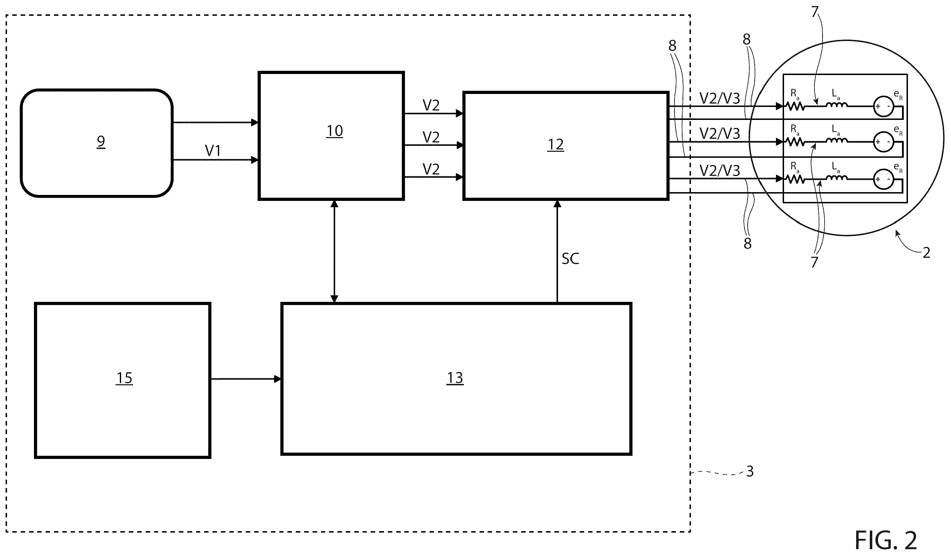

As shown schematically in Figure 2, the central stator of the axial flux electric motor 2 comprises three stator windings 7. The stator windings 7 have respective pairs of motor phase lines 8. The stator of the axial flux electric motor 2 comprises six motor phase lines 8, wherein each pair of lines is electrically connected to a stator winding 7.

According to a preferred embodiment, the three stator windings 7 conveniently consist of multiple stator coils (schematically depicted with an inductor La in series with a resistor Ra and a voltage generator e_{R}). According to a preferred, exemplary embodiment, the stator coils may preferably be arranged angularly spaced apart, one relative to the other, in the central stator of the axial flux electric motor 2, and are electrically interconnected to form the three stator windings 7.

The electronic control system 3 comprises an electric battery pack 9 that is mounted on board the automotive vehicle 1. The electric battery pack 9 is configured to provide a direct electric voltage V1 via output terminals.

The electronic control system 3 also comprises an inverter 10 that is mounted on board the automotive vehicle 1.

The inverter 10 is electrically connected via input terminals to the output terminals of the electric battery pack 9 to receive direct voltage V1 as input. For example, the electrical voltage V1 can be between approx. 200 and approx. 800 V. The inverter 10 is configured to supply a three-phase alternating electrical voltage V2 via the output terminals.

The electronic control system 3 also includes a commutator device 12 that is mounted on the automotive vehicle 1 and electrically connects the output terminals of the inverter 10 to the electric motor 2. The commutator device 12 is electrically connected to the output terminals of the inverter 10 to receive the three-phase alternating electrical voltage V2. The commutator device 12 is also electrically connected to the three stator windings 7 by means of the six motor supply lines 8.

According to this invention, the commutator device 12 is configured to switch, preferably in response to a control signal SC, between a first switching state, in which it electrically connects the three stator windings 7 according to a star-shaped electrical configuration, and a second switching state different to the first switching state, in which it electrically connects the three stator windings 7 according to a delta electrical configuration.

When the commutator device 12 is in the first switching state and the three stator windings 7 are connected to each other via the commutator device 12 in the star-shaped electrical configuration, the inverter 10 supplies the three-phase alternating electrical voltage V2 to them via the motor supply lines 8.

When the commutator device 12 is in the second switching state and the three stator windings 7 are connected to each other according to the delta electrical configuration, the inverter 10 supplies a three-phase alternating electrical voltage V2 that is greater than the electrical voltage V2 to them via the motor supply lines 8. In the delta electrical configuration, the electrical voltage V3 corresponds approximately to V3=V2*1.732 volts.

It is understood that the electrical voltages V1, V2 and V3 depend on the state of charge of the electric batteries 9, that is, they may vary depending on it.

According to this invention, the electronic control system 3 also comprises an electronic control unit 13, which is configured to provide the commutator device 12 with the control signal SC to selectively switch the commutator device 12 from the first switching state to the second switching state, or vice versa, from the second switching state to the first switching state.

According to this invention, the electronic control unit 13 is configured to make the commutator device 12 switch from the first switching state to the second switching state, or vice versa, via the control signal SC, based on one or more control parameters associated with the automotive vehicle 1 and/or the electric motor 2.

According to one embodiment, the control parameters may optionally comprise: one or more motor vehicle values associated with the automotive vehicle 1 and/or one or more motor vehicle values associated with the electric motor 2.

The motor vehicle values may optionally include: the speed of the automotive vehicle 1, and/or the acceleration of the automotive vehicle, and/or the torque supplied to the wheels 5 of the automotive vehicle 1.

The motor vehicle values may optionally include: the rotation speed of the electric motor 2, and/or the torque generated by the electric motor 2, and/or a predetermined power of the electric motor 2, and/or a predetermined performance or efficiency of the electric motor 2.

The electronic control unit 13 is also configured to determine the motor vehicle value/s and/or the motor values on the basis of one or more motor vehicle commands issued by the driver to the automotive vehicle 1.

The automotive vehicle commands comprise commands that the driver of the automotive vehicle 1 issues via the driver command devices 15 when the automotive vehicle 1 is moving. The automotive vehicle commands may include: a speed command, and/or an acceleration command, and/or a torque command. The driver command devices 15 may include, for example, the accelerator pedal, or command levers on the steering wheel, a command console, or the like.

Alternatively or in addition, the automotive vehicle commands may include driving/use modes for the automotive vehicle 1 that can be selected by the driver of the road vehicle 1. The selection of driving/use modes can be made, for example, via a console or selectors in the passenger compartment of the automotive vehicle 1.

The selectable driving/use modes of the automotive vehicle are preferably different from each other. The selectable driving/use modes can be associated with respective trends (profiles) of speed, and/or torque, and/or performance of the electric motor 2, and/or speed, and/or torque and/or acceleration of the automotive vehicle 1.

A first driving mode can be characterised by an automotive vehicle operating profile with high (starting) torque and low speed; a second driving mode can be characterised by an automotive vehicle operating profile with high speed and low torque; a third driving mode can be characterised by an automotive vehicle operating profile with high performance or efficiency, high speed, and low torque.

The first driving mode may correspond to a "sports" driving mode, the second driving mode may correspond to a "motorway" driving mode, and the third driving mode may correspond to an eco driving mode (environmentally friendly) .

It is understood that the driving modes according to this invention are not intended to be limited to the above-mentioned modes, but other driving modes in which other automotive vehicle parameters are provided for as an alternative or in addition may be provided for.

According to a possible embodiment in which the control parameter is a motor value corresponding to the speed of the electric motor and/or the torque of the electric motor, the electronic control unit 13 commands the commutator device 12 to switch between the first state and the second state, or vice versa, based on the speed and/or torque. In this case, the electronic control unit 13 keeps the commutator device 12 in the first state when the speed of the electric motor 2 is below a speed threshold or when the torque of the electric motor is above a torque threshold. In this condition, the three stator windings 7 operate in the star configuration and are therefore supplied by the inverter 10 via the voltage V2.

The electronic control unit 13 generates the control signal SC to command the switching of the commutator device 12, which switches from the first state to the second state, when the speed of the electric motor 2 exceeds a speed threshold or when the torque of the electric motor 2 is reduced to a value below a torque threshold.

In this condition, the stator windings 7 operate in the delta electrical configuration and are supplied by the inverter 10 via the voltage V3. For example, a preferred speed threshold might range between 7,500 rpm and 8,500 rpm, more preferably 8,000 rpm.

Alternatively or in addition, according to a possible embodiment in which the control parameter is a motor vehicle value, the electronic control unit 13 generates the control signal SC to switch the commutator device 12 between the first state and the second state, or vice versa, based on the motor vehicle value.

According to a possible embodiment, if the motor vehicle value is the speed or acceleration or torque of the automotive vehicle 1, the electronic control unit 13 commands the commutator device 12 so as to keep it in the first state when the speed of the automotive vehicle is below a speed threshold or when the acceleration or torque is greater than an acceleration/torque threshold.

The electronic control unit 13 then commands the switching of the commutator device 12, which switches from the first state to the second state, when the speed of the automotive vehicle 1 exceeds a predetermined vehicle speed threshold or when the acceleration or torque has a value below a predetermined acceleration threshold or torque threshold, respectively. An automotive vehicle speed threshold could, conveniently, range between 200 km/h and 300 km/h.

Alternatively or in addition, in accordance with a possible embodiment in which the control parameter is a motor vehicle value and the electronic control unit 13 determines the motor vehicle value on the basis of a motor vehicle command corresponding to a speed command, the electronic control unit 13 commands the switching of the commutator device 12 between the first state and the second state, or vice versa, on the basis of the speed required by the driver command.

For example, the electronic control unit 13 commands the commutator device 12 to keep it in the first state when the speed required by the vehicle command is below a speed threshold, and commands the commutator device 12 to switch it from the first state to the second state when the automotive vehicle speed required by the driver exceeds the speed threshold.

Alternatively or in addition, according to a possible embodiment in which the control parameter is a motor vehicle value and the electronic control unit 13 determines the motor vehicle value on the basis of a motor vehicle command corresponding to the acceleration command indicating a request for acceleration, the electronic control unit 13 commands the commutator device 12 to switch between the first state and the second state, or vice versa, on the basis of the acceleration requested by the automotive vehicle command. For example, the electronic control unit 13 commands the commutator device 12 to maintain it in the first state when the acceleration requested by the driver is above an acceleration threshold and switches from the first state to the second state when the acceleration requested by the driver is below the acceleration threshold.

Alternatively or in addition, according to a possible embodiment in which the control parameter is a motor vehicle value and the electronic control unit 13 determines the motor vehicle value on the basis of a driving/use mode of the automotive vehicle 1 corresponding to a speed/torque profile, the electronic control unit 13 switches the commutator device 12 between the first state and the second state, or vice versa, on the basis of the driving mode selected.

When the first driving mode characterised by high starting torque and low speed is selected, the electronic control unit 13 commands the commutator device 12 to keep it in the first state so that the stator windings are forced into the star configuration where the current is high (high torque). When the second driving mode characterised by low torque and high speed is selected, the electronic control unit 13 controls the commutator device 12 to make it switch from the first to the second state so that the stator windings are forced into the delta configuration where the voltage is high and the current reduced.

When the third driving mode characterised by high performance or efficiency is selected, the electronic control unit 13 commands the commutator device 12 to switch it between the first and second states, and vice versa, based on the outcome of a comparison between the efficiency of the electric motor 2 and a predetermined performance threshold. For example, if the performance of the electric motor 2 is below a predetermined performance threshold, the commutator device 12 is switched from the first state to the second state.

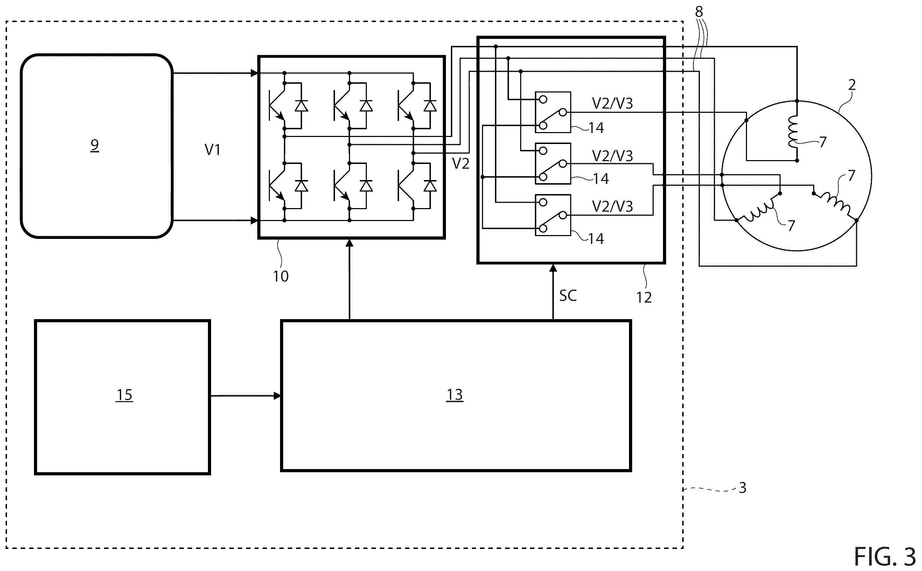

According to a preferred embodiment shown in Figure 3, the commutator device 12 may comprise a series of electric or electronic switches 14. According to a preferred embodiment, there are three switches 14 and each may comprise: a first terminal electrically connected to one of the two motor phase lines 8 of a stator winding 7, a second terminal electrically connected to the second terminals of the other switches 14 so as to form a star connection branch with them, and a third terminal that is connected to the other of the two motor phase lines 8 of another stator winding 7 so as to form a delta electrical configuration with the third terminals of the other two switches 14 and the stator windings 7. Each switch 14 comprises a switch that, in the first state, connects the first terminal to the second terminal (connected to the star branch) in the star-shaped electrical configuration, and vice versa in the second state electrically connects the first terminal to the third terminal in the delta electrical configuration.

The switches 14 can preferably be electric switches or electronic switches. The switches 14 may, even more preferably, comprise solid-state switches and/or relays. The control system described above enables the electric motor 2 to achieve high performance in a supercar or super sports automotive vehicle. In particular, the selective control of the star and delta configuration based on the automotive vehicle or motor parameters makes it possible to reduce the defluxing current of the electric motor 2 when, in response to a speed request above 250 km/h, the axial flux electric motor must operate at speeds above 7000 rpm. In this case, switching the axial flux electric motor to the delta configuration actually makes it possible, on the one hand, to increase the stator supply voltage and thus increase the rotation speed of the axial flux electric motor and, on the other hand, to simultaneously reduce the torque and thus the defluxing current.

It should be noted that the reduction in defluxing current achieved by the configuration described above causes a reduction in the internal temperatures reached by the axial flux electric motor at high speeds. This leads to a reduction in the cost of motor materials, particularly magnets.

It should also be noted that switching to the star-shaped electrical configuration allows the operational condition of the automotive vehicle to be met when low speed and high torque are required.

Selective switching from the star to the delta configuration, and vice versa, also allows high peak torque to be achieved, high speeds to be reached and ensures continuous high power even at the highest speeds required in a supercar. It is also possible to optimise the design point of the axial flux electric motor ensuring high efficiency under real cycle conditions.

## Claims

1. An electronic control system (3) configured to control at least one axial flux electric motor (2) for an automotive vehicle (1) provided with three stator windings (7), wherein said electronic control system (3) is mounted on board said automotive vehicle and comprises:
an electric battery pack (9), which is configured to provide via output terminals a direct electric voltage (V1),
an inverter (10) which is electrically connected via input terminals to the output terminals of the electric battery pack (9) to receive the direct voltage (V1), and is configured to provide, via respective output terminals, a first three-phase alternating electric voltage (V2),
a commutator device (12), which is electrically connected to the output terminals of the inverter (10) to receive the first three-phase alternating electric voltage (V2) and is configured to switch, in response to a control signal (SC), between a first switching state, in which it electrically connects the three stator windings (7) according to a star-shaped electrical configuration to provide them with said first three-phase alternating electric voltage (V2) and a second switching state, in which it electrically connects the three stator windings (7) according to a delta electrical configuration to supply them with a second three-phase alternating electric voltage (V3) greater than the first three-phase alternating electric voltage (V2),
an electronic control unit (13) that is configured to supply the control signal (SC) to the commutator device (12) to switch it between the first switching state and the second switching state, and vice versa, based on one or more first parameters of the automotive vehicle (1) and/or one or more second parameters of said axial flux electric motor (2).

2. Electronic control system according to claim 1, wherein the first parameters of the automotive vehicle (1) comprise one or more motor vehicle values indicative of: the speed of the automotive vehicle (1), and/or the torque transmitted to the wheels of the automotive vehicle (1), and/or the acceleration of the automotive vehicle (1), and/or a driving mode selected by the driver of the automotive vehicle (1) by means of selection devices (15) mounted on board the automotive vehicle (1).

3. Electronic control system according to claim 2, wherein said electronic control unit (13) is configured to:
provide the control signal (SC) to the commutator device (12) to switch it from the first state to the second state when the speed of the automotive vehicle (1) is greater than a predetermined speed-vehicle threshold,
provide the control signal (SC) to the commutator device (12) to switch it from the second state to the first state when the speed of the automotive vehicle (1) is less than the predetermined vehicle speed threshold.

4. Electronic control system according to claim 2 or 3, wherein the electronic control unit (13) is configured to
provide the control signal (SC) to the commutator device (12) to switch it from the second state to the first state when the torque transmitted to the wheels of the automotive vehicle (1) is greater than a predetermined vehicle torque threshold,
provide the control signal (SC) to the commutator device (12) to switch it from the first state to the second state when the automotive vehicle torque is less than a predetermined vehicle speed threshold.

5. Electronic control system according to claim 2, and any one of claims 3 or 4, wherein a first driving mode selectable by the driver is associated with a vehicle condition in which the motor torque is greater than a predetermined high torque and the rotation speed is less than a predetermined low speed, the electronic control unit (13) is configured to provide the control signal (SC) to the commutator device (12) to switch it from the second state to the first state when the driver selects said first driving mode.

6. Electronic control system according to claim 2 and any one of claims 3 to 5, wherein a second driving mode selectable by the driver is associated with a vehicle condition in which the motor torque is less than a reduced torque and the speed is greater than a high speed, the electronic control unit (13) is configured to provide the control signal (SC) to the commutator device (12) to switch it from the first state to the second state when the driver selects said second driving mode.

7. An electronic control system according to any of the preceding claims, wherein the control parameters of the axial flux electric motor (2) comprise one or more motor values indicative of: the rotational speed of the axial flux electric motor (2) and/or torque generated by the axial flux electric motor (2).

8. Electronic control system according to claim 7, wherein said electronic control unit (13) is configured to:
provide the control signal (SC) to the commutator device (12) to switch it from the first state to the second state when the speed of the electric motor is greater than a predetermined motor speed threshold,
provide the control signal (SC) to the commutator device (12) to switch it from the second state to the first state when the speed of the motor is less than a predetermined motor speed threshold.

9. Electronic control system according to claim 7 or 8, wherein the electronic control unit (13) is configured to
provide the control signal (SC) to the commutator device (12) to switch it from the second state to the first state when the torque generated by the electric motor (2) is greater than a predetermined motor torque threshold
provide the control signal (SC) to the commutator device (12) to switch it from the first state to the second state when the torque generated by the axial flux electric motor (2) is less than a predetermined motor torque threshold.

10. Automotive vehicle provided with wheels (5) and comprising an electric powertrain (6), which is configured to bring the wheels (5) into rotation, and is provided with at least one axial flux electric motor (2) provided with three stator windings (7) and configured to rotate one or more wheels (5),
the automotive vehicle (1) comprises an electronic control system (3) of said axial flux electric motor (2) made according to any of the preceding claims.

11. A method of controlling at least one axial flux electric motor (2) of an electric powertrain (6), which is mounted in an automotive vehicle (1) to rotate the wheels (5) of said automotive vehicle (1), in which the axial flux electric motor (2) is provided with three stator windings (7),
and in which in said automotive vehicle the following are mounted:
an electric battery pack (9) configured to provide via output terminals a direct electric voltage (V1),
an inverter (10) which is electrically connected via input terminals to the output terminals of the electric battery pack (9) to receive the direct voltage (V1), and is configured so as to provide via respective output terminals a first three-phase alternating electric voltage (V2),
a commutator device (12), which is electrically connected to the output terminals of the inverter (10) to receive the first three-phase alternating electric voltage (V2), and is configured to switch, between a first switching state, in which it electrically connects the three stator windings (7) according to a star-shaped electrical configuration to supply them with said first electric voltage (V2) and a second switching state, in which it electrically connects the three stator windings (7) according to a delta electrical configuration to supply them with a second three-phase alternating electric voltage (V3) greater than the first three-phase alternating electric voltage (V2),
the method includes the step of commanding the switching of the commutator device (12) between the first switching state and the second switching state, and vice versa, based on one or more first parameters of the automotive vehicle (1) and/or one or more second parameters of said axial flux electric motor (2).
